**Europäisches Patentamt**

**European Patent Office**

**Office européen des brevets**

(19)

(11) Veröffentlichungsnummer: **0 083 026**
**B1**

(12) **EUROPÄISCHE PATENTSCHRIFT**

(45) Veröffentlichungstag der Patentschrift:
24.07.85

(51) Int. Cl.⁴: **G 21 C 19/06,** G 21 C 19/08

(21) Anmeldenummer: **82111614.2**

(22) Anmeldetag: **14.12.82**

(54) **Trockenlager für abgebrannte Kernreaktorbrennelemente.**

(30) Priorität: **24.12.81 DE 3151310**

(43) Veröffentlichungstag der Anmeldung:
**06.07.83 Patentblatt 83/27**

(45) Bekanntmachung des Hinweises auf die Patenterteilung:
**24.07.85 Patentblatt 85/30**

(84) Benannte Vertragsstaaten:
**BE CH DE FR GB LI SE**

(56) Entgegenhaltungen:
**EP - A - 0 022 951**
**DE - A - 2 929 467**
**DE - A - 3 014 252**
**DE - C - 1 053 109**
**FR - A - 1 460 558**
**GB - A - 2 046 162**

**ATOMKERNENERGIE KERNTECHNIK, Band 35, Nr. 2,**
**1980, Seiten 111-122, München, DE. W. HAME et al.:**
*"Inhärent sichere Luftkühlung bei der Lagerung*
*selbsthitzender Radionuklidkonfigurationen"*

(73) Patentinhaber: **Deutsche Gesellschaft für**
**Wiederaufarbeitung von Kernbrennstoffen mbH,**
**Hamburger Allee 4 Postfach 1407,**
**D-3000 Hannover 1 (DE)**

(72) Erfinder: **Spilker, Harry, Dipl.-Ing., Talstrasse 3,**
**D-3252 Bad Münder (DE)**
Erfinder: **Einfeld, Klaus, Dr.-Ing., Stiegeweg 11,**
**D-3164 Hohenhameln (DE)**

## Beschreibung

Abgebrannte Kernreaktorbrennelemente werden zum Abklingen in einem mit Wasser gefüllten Becken aufbewahrt. Nach einer bestimmten Aufbewahrungsdauer, während der der Wärmeanfall der Brennelemente exponentiell abfällt, werden die Brennelemente in Transportbehälter gepackt und in ein Zwischenlager verbracht. Dort werden die Brennelemente gelagert, bevor sie einer Wiederaufarbeitung zugeführt werden.

Es ist bekannt (DE-A Nr. 2929467), ein derartiges Zwischenlager als Trockenlager auszubilden, bei dem die Brennelemente nach dem Entladen aus dem Transportbehälter in gasdichten Lagerbüchsen eingeschlossen und in mehreren Lagerräumen eines länglichen Lagergebäudes horizontal gestapelt werden. Die Kühlung der Lagerbüchsen wird durch natürliche Konvektion erreicht. Die sich erwärmende Kühlluft steigt auf und gibt die Wärme über Wärmeaustauscher an die Aussenluft ab.

Bei einer vorgeschlagenen Ausführung eines die horizontal gestapelten Lagerbüchsen aufnehmenden Lagerraumes wird der Lagerraum mit stationären, horizontal angeordneten Lagerrohren versehen. Die Lagerbüchsen werden in diese Lagerrohre eingeschoben, worauf die Lagerrohre über einen geeigneten Stopfen an ihrer Beschicköffnung dicht verschlossen werden. In diesem Vorschlag wird durch die aufsteigende Kühlluft eine indirekte Kühlung der Lagerbüchsen erreicht.

Der Erfindung liegt die Aufgabe zugrunde, ein Trockenlager der eingangs beschriebenen Art derart auszugestalten, dass ein besserer Wärmeübergang zwischen den Lagerbüchsen oder den die Lagerbüchsen enthaltenden Lagerrohren und der aufsteigenden Kühlluft erreicht wird.

Die Aufgabe wird erfindungsgemäss durch die im Anspruch 1 genannten Merkmale gekennzeichnet.

Das kreuzweise Anordnen der Lagerbüchsen führt zu einer Verwirbelung der aufsteigenden Kühlluft, die stets in die Zwischenräume der Lagerbüchsen oder Lagerrohre fliesst, die oben von der nächsten Lage der Lagerbüchsen oder Lagerrohre abgedeckt sind. Ein Ausbilden senkrecht aufsteigender Luftstromfäden wird nahezu verhindert, so dass der Wärmeübergang an die zur Verfügung stehende Luft verbessert wird.

Eine vorteilhafte Ausbildung der Erfindung wird durch die im Anspruch 2 genannten Merkmale gekennzeichnet. Das schräge Anordnen der Lagerbüchsen ermöglicht eine raumsparende Anordnung von Lagerflächen. Die Transportgasse zwischen beidseits des Lagerraumes liegenden Lagerräumen und die Spurbreite des das Transportgerät tragenden kranartigen Transportfahrzeuges können enger gestaltet werden, weil die Beladung der Laderäume schräg zur Transportgasse und zur Kranspur erfolgt.

Eine vorteilhafte Ausgestaltung der Erfindung wird durch die im Anspruch 3 genannten Merkmale gekennzeichnet. Durch diese vorteilhafte Anordnung der Lagerbüchsen wird die aufsteigende Kühlluft über der gesamten Stapelfläche zu Richtungswechseln und daraus erfolgenden Verwirbelungen gezwungen.

Eine weitere vorteilhafte Ausgestaltung der Erfindung wird durch die im Anspruch 4 genannten Merkmale gekennzeichnet. Die auf diese Weise in einer Kaverne oder einem Lagergang eines EVA-sicheren Gebäudes angeordneten Lagermoduln können über die beiden zum Lagergang zeigenden Seitenflächen kreuzweise beladen werden. In dem Lagergang bzw. in der Lagerkaverne wird so eine hohe Raumausnutzung ermöglicht.

Werden die Lagermoduln gemäss dem Kennzeichen des Anspruches 5 ausgebildet, können die Transportgasse und der Lagergang enger bemessen sein. Das längs des Lagerganges oder der Kaverne verfahrbare kranartige Transportfahrzeug überfährt die eine Hälfte des Lagermoduls. Die zur Transportgasse gewandte Hälfte des Flächenbereiches jedes Lagermoduls wird so für Beschickungsarbeiten nutzbar. Der Raumbedarf für Beladevorgänge der Lagerräume bleibt begrenzt. Die andere Hälfte der Querschnittsfläche jedes Lagermoduls kann als Abluftkanal dienen und nach oben geführt an die Hauptabluftleitung angeschlossen werden.

Anhand der Zeichnung wird ein schematisches Ausführungsbeispiel der Erfindung nachstehend näher erläutert. Zum Verständnis der Erfindung nicht notwendige Einrichtungen sind der besseren Übersicht halber fortgelassen. Es zeigt:

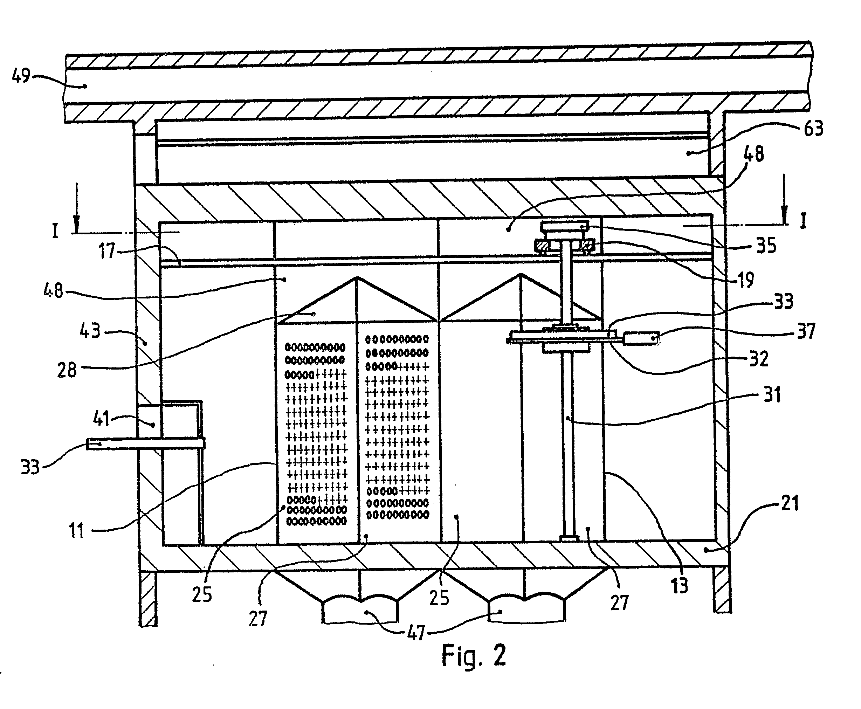

Fig. 1 eine gemäss Linie I-I in Fig. 2 horizontal geschnittene Draufsicht eines länglichen Lagergebäudes eines Trockenlagers mit beidseitig angeordneten, als Lagermoduln ausgebildeten Lagerräumen, wobei ein Lagermodul ohne Abdeckung dargestellt ist,

Fig. 2 einen Längsschnitt des in Fig. 1 gezeigten Lagergebäudes gemäss Linie II-II in Fig. 1,

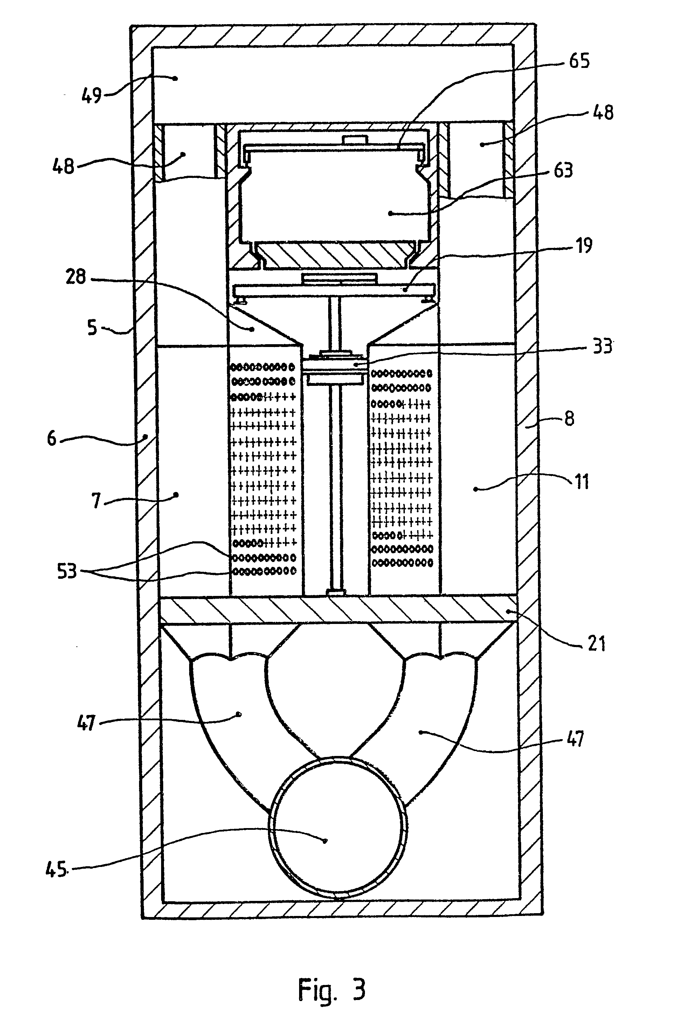

Fig. 3 einen Querschnitt durch das Lagergebäude gemäss Linie III-III in Fig. 1,

Fig. 4 einen als Lagermodul ausgebildeten Lagerraum in perspektivischer und teilweise aufgebrochener Darstellung.

In einem länglichen Lagergebäude 5 sind auf jeder Längsseite zwei mit einer quadratischen Grundfläche versehene, aus separaten Lagermoduln bestehende Lagerräume 7, 9, 11, 13 angeordnet, deren eine Flächendiagonale parallel zu den Längswänden liegt. Parallel zu den Längswänden 6 und 8 sind Laufschienen 15 bzw. 17 im Lagergebäude 5 angeordnet, auf denen eine Kranbrücke 19 verfahrbar ist. Diese Laufschienen 15 bzw. 17 verlaufen in etwa über der parallel zu den Längswänden 6 und 8 liegenden Flächendiagonale der Lagermoduln 7, 9, 11, 13. Das Lagergebäude 5 weist eine Sohlenplatte 21 aus Beton auf, die von vier quadratischen Ausnehmungen 23 zur Aufnahme der Lagermoduln 7, 9, 11, 13 unterbrochen ist. Die übrige Abgrenzung des jeweiligen Lagermoduls 7, 9, 11, 13 wird durch senkrechte Betonwände 24, 25, 26, 27 und eine Betonabdeckung 28 erreicht.

Über den Lagermoduln 7, 9, 11, 13 sind die Laufschienen 15 bzw. 17 befestigt, auf denen die Kranbrücke 19 verfahrbar angeordnet ist.

Die Kranbrücke 19 ist ein Teil eines Transportfahrzeuges 20, das ein quer zur Kranbrücke 19 verfahrbares Transportgerät 29 aufweist. Das Transportgerät 29 besteht aus Transportmast 31, Aufnahmevorrichtung 32 für die Lagerbüchsen 33 und einer Laufkatze 35. Die Aufnahmevorrichtung 32 ist drehbar angeordnet und mit einer Schubvorrichtung 37 versehen, die die Lagerbüchsen 33 in ihrer axialen Richtung aus der Aufnahmevorrichtung 32 verfahren kann.

Am Eingang des Lagergebäudes 5 ist eine Durchlassöffnung 41 in einer Betonwand 43 vorgesehen, durch die einzelne Lagerbüchsen 33 in das Lagergebäude 5 verbracht werden können.

Über einen Zuluftkanal 45 grossen Querschnittes werden die Lagermoduln 7, 9, 11, 13 von unten über Stichkanäle 47 mit frischer Kühlluft beschickt. Die sich erwärmende und aufsteigende Abluft wird über Abluftkanäle 48, die den Lagermoduln über jeweils die halbe, der Transportgasse 61 abgewandte Querschnittsfläche aufgesetzt sind, einer Hauptabluftleitung 49 zugeführt. Die andere halbe Querschnittsfläche jedes Lagermoduls 7, 9, 11, 13 weist die dachförmige Betonabdeckung 28 auf und ist vom Transportfahrzeug 20 überfahrbar.

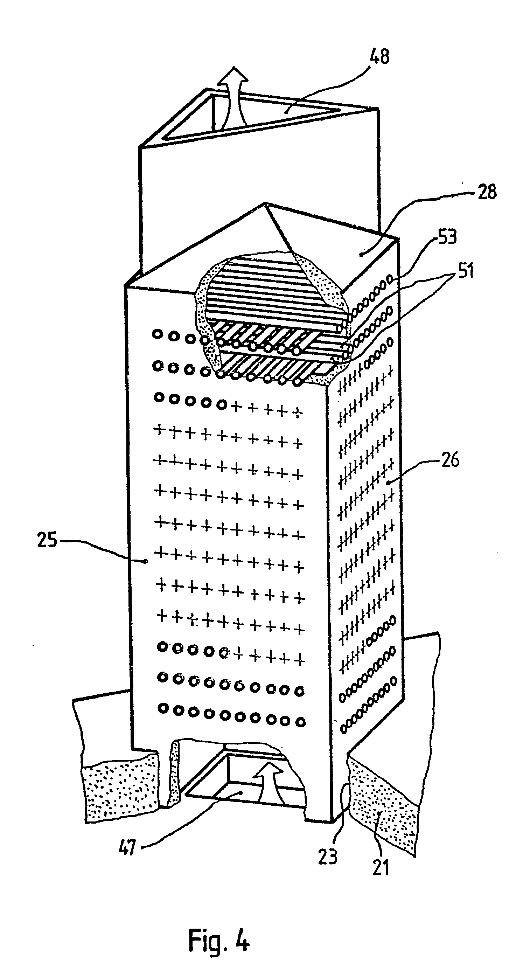

In den Lagermoduln 7, 9, 11, 13 sind Lagerrohre 51 in horizontaler Lage übereinandergestapelt (Fig. 4). Die hinteren Enden der Lagerrohre 51 sind durch in den hinteren Betonwänden 24, 27 eingelassene geeignete Vorrichtungen (hier nicht sichtbar) gehalten, während die vorderen Enden in jeweils einer Bohrung 53 der beiden vorderen zur Transportgasse 61 zeigenden Betonwände 25, 26 jedes Lagermoduls 7, 9, 11, 13 abgestützt und abgedichtet sind.

Die in der horizontalen Ebene parallel angeordneten Lagerrohre 51 sind zur nächsten horizontalen Ebene immer kreuzweise angeordnet. Dabei liegen die Lagerrohre 51 einer Ebene immer auf Lücke zu den Lagerrohren 51 der übernächsten Ebene, in der die Lagerrohre 51 in gleicher Richtung angeordnet sind. In diese Lagerrohre 51 werden die die abgebrannten Kernreaktorbrennelemente enthaltenden Lagerbüchsen 33 geschoben. Die Öffnungen der Lagerrohre 51 werden dann durch Stopfen dicht verschlossen.

Über der Kranspur erstreckt sich ein durch Betonwände abgeschirmter Interventionsraum 63, in dem ein Hilfskran 65 verfahrbar angeordnet ist.

Die über den Zuluftkanal 45 zufliessende Kühlluft wird bei ihrem Aufstiegsweg im Lagermodul 7, 9, 11, 13 aufgrund der Erwärmung ständig aus der vertikalen Auftriebsrichtung abgelenkt. Es kommt zu Verwirbelungen und zu einem guten Wärmeübergang zwischen den Lagerrohren 51 und der zur Verfügung stehenden Kühlluftmenge. Dadurch wird die indirekte Kühlung der Lagerbüchsen 33 erhöht.

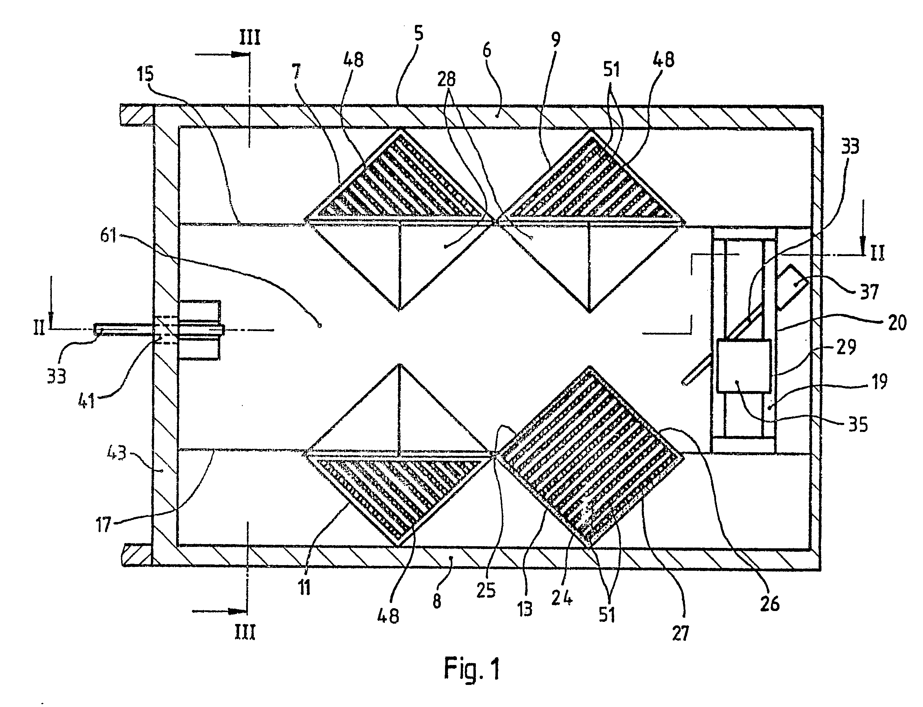

Die Transportgasse 61 zwischen den sich gegenüberliegenden Lagermoduln 7, 9 bzw. 11, 13 kann eine geringe Weite haben, die lediglich etwas grösser als die Breite des Transportmastes 31 sein muss. Die Beladung der Lagermoduln 7, 9, 11, 13 erfolgt schräg zur Transportgasse 61 (Fig. 1). Die Lagerbüchsen 33 werden durch die zur Transportgasse 61 gewandten Betonwände 25 und 26 der Lagermoduln 7, 9, 11, 13 eingebracht.

*Bezugszeichenliste*

5 Lagergebäude
6 Längswand
7 Lagerraum
8 Längswand
9 Lagerraum
11 Lagerraum
13 Lagerraum
15 Laufschiene
17 Laufschiene
19 Kranbrücke
20 Transportfahrzeug
21 Sohlenplatte
23 Quadratische Ausnehmungen
24 Betonwand
25 Betonwand
26 Betonwand
27 Betonwand
28 Betonabdeckung
29 Transportgerät
31 Transportmast
32 Aufnahmevorrichtung
33 Lagerbüchsen
35 Laufkatze
37 Schubvorrichtung
41 Durchlassöffnung
43 Betonwand
45 Zuluftkanal
47 Stichkanäle
49 Hauptabluftleitung
51 Lagerrohre
53 Bohrungen
61 Transportgasse
63 Interventionsraum
65 Hilfskran

## Patentansprüche

1. Trockenlager für Nachzerfallswärme entwikkelnde radioaktive Stoffe, insbesondere abgebrannte Kernreaktorbrennelemente, die in gasdichten Lagerbüchsen eingeschlossen sind, mit mehreren die horizontal angeordneten Lagerbüchsen aufnehmenden Lagerräumen in einem EVA-sicheren Gebäude oder einem unterirdischen Lager, neben denen eine Transportgasse für ein verfahrbares Transportgerät verläuft und in denen die Lagerbüchsen durch eine natürliche Konvektion direkt oder indirekt gekühlt werden, dadurch gekennzeichnet, dass sich die Lagerbüchsen (33) zweier benachbarter horizontaler Ebenen kreuzen.

2. Trockenlager nach Anspruch 1, dadurch gekennzeichnet, dass die in den Lagerräumen (7, 9, 11, 13) angeordneten Lagerbüchsen (33) schräg zur Transportgasse (61) liegen.

3. Trockenlager nach Anspruch 1 oder 2, dadurch gekennzeichnet, dass die Lagerbüchsen (33) einer horizontalen Ebene auf Lücke zu den Lagerbüchsen (33) der übernächsten Ebene angeordnet sind.

4. Trockenlager nach Anspruch 2, dadurch gekennzeichnet, dass die die Lagerbüchsen (33) aufnehmenden Lagerräume (7, 9, 11, 13) separate Lagermoduln mit quadratischer Grundfläche sind und dass diese Lagermoduln mit der einen Flächendiagonale senkrecht zur Transportgasse (61) angeordnet sind.

5. Trockenlager nach Anspruch 4, dadurch gekennzeichnet, dass die Querschnittsflächen der Lagermoduln (7, 9, 11, 13) je zu einer Hälfte, die zur Transportgasse (61) gewandt sind, überfahrbar sind und dass die anderen Hälften der Querschnittsflächen als Abluftführungen ausgebildet sind.

## Claims

1. A dry store for radioactive substances which generate post-disintegration heat, in particular depleted nuclear reactor fuel elements, which are enclosed in gas-tight storage containers, with a plurality of storage spaces for accommodating the horizontally disposed storage containers, in an external influences-proof building or an underground store, besides which extends a transport path for a movable transport apparatus and in which the storage containers are directly or indirectly cooled by natural convection, characterised in that the storage containers (33) in two adjacent horizontal planes cross each other.

2. A dry store according to Claim 1, characterised in that the storage containers (33) which are disposed in the storage spaces (7, 9, 11, 13) are arranged inclinedly with respect to the transport path (61).

3. A dry store according to Claim 1 or Claim 2, characterised in that the storage containers (33) of one horizontal plane are arranged on gaps relative to the storage containers (33) of the next but one plane.

4. A dry store according to Claim 2, characterised in that the storage spaces (7, 9, 11, 13) accommodating the storage containers (33) are separate storage modules with a square base surface and that said storage modules are arranged with the one diagonal of the surface normal to the transport path (61).

5. A dry store according to Claim 4, characterised in that one half of each of the cross-sectional areas of the storage modules (7, 9, 11, 13), being said halves which are towards the transport path (61), can be travelled over, and that the other halves of the cross-sectional areas are formed as exhaust air duct means.

## Revendications

1. Stockage à sec pour des matières radioactives dégageant de la chaleur résiduelle de désintégration, notamment pour des éléments combustibles épuisés de réaction nucléaire, qui sont enfermées dans des boîtes de stockage étanches au gaz, comprenant plusieurs chambres de stockage, recevant les boîtes de stockage disposées horizontalement, dans un bâtiment à l'épreuve d'un accident extérieur ou dans un stockage souterrain, à côté desquelles passe une voie de transport pour un appareil de transport déplaçable et dans lesquelles les boîtes de stockage sont refroidies directement ou indirectement par une convection naturelle, caractérisé en ce que les boîtes de stockage (33) de deux plans horizontaux voisins se croisent.

2. Stockage à sec suivant la revendication 1, caractérisé en ce que les boîtes de stockage (33) disposées dans les chambres de stockage (7, 9, 11, 13) sont disposées en oblique, par rapport à la voie de transport (61).

3. Stockage à sec suivant l'une des revendications 1 ou 2, caractérisé en ce que les boîtes de stockage (33) d'un plan horizontal sont disposées dans les intervalles des boîtes de stockage (33) du plan venant après un plan suivant.

4. Stockage à sec suivant la revendication 2, caractérisé en ce que les chambres de stockage (7, 9, 11, 13) recevant les boîtes de stockage (33) sont des modules de stockage distincts à surface de base carrée, et en ce que ces modules de stockage sont disposés en ayant l'une de leurs diagonales de surface perpendiculaire à la voie de transport (61).

5. Stockage à sec suivant la revendication 4, caractérisé en ce que les surfaces des sections transversales des modules de stockage (7, 9, 11, 13) peuvent être transportées chacune pour une moitié qui est tournée vers la voie de transport (61), et les autres moitiés des surfaces de section transversale sont agencées en conduits d'évacuation de l'air.

Fig. 1

0 083 026

Fig. 2

0 083 026

Fig. 3

Fig. 4